# DEMANDE DE BREVET EUROPEEN

(11) **EP 1 942 316 A1**
(43) Date de publication de la demande: **09.07.2008**
(21) Numéro de dépôt: 07291596.0
(22) Date de dépôt: 21.12.2007
(51) Int. Cl.: G01D 5/14, G01P 3/44

(54) **Dispositif de détection et d'enregistrement de paramètres de fonctionnement d'une roue de véhicule, ensemble d'entretoise instrumentée et moyeu de roue de véhicule**

(30) Priorité: 03.01.2007 FR 0752517
(71) Demandeur: Aktiebolaget SKF, 415 50 Göteborg (SE)
(72) Inventeur: Landrieve, Franck, 37230 Fondettes (FR)
(74) Mandataire: Zapalowicz, Francis

(57) **Abrégé**

Dispositif de détection et d'enregistrement 9 de paramètres de fonctionnement d'une roue 1 de véhicule, en particulier d'une roue de véhicule à deux roues, la roue 1 comprenant un moyeu 2 et une entretoise 8. Le dispositif 9 est fixé sur l'entretoise 8 tubulaire, tout en étant distinct de ladite l'entretoise tubulaire 8.

## Description

La présente invention concerne le domaine des dispositifs de roue de véhicule, plus particulièrement les roues de véhicule à deux roues, par exemple pour les motos de compétition.

Dans les motos de compétition, les roues sont en général des éléments coûteux, par exemple réalisées en magnésium, et sont soumises à des contraintes extrêmement sévères lors des courses. Afin de se prémunir contre tout risque de défaillance du à une utilisation trop prolongée des roues, il est nécessaire de les retirer du service après un certain nombre de kilomètres parcourus en vue d'un examen approfondi suivi d'une remise en service ou d'une réforme.

Or, pour des raisons techniques et pratiques, en particulier en compétition, les roues sont souvent échangées en raison de variations des conditions météorologiques, de crevaison, etc. Ainsi, plusieurs roues différentes peuvent être utilisées pour une même moto. Le compteur kilométrique du véhicule ne traduit donc pas le kilométrage parcouru par chaque roue.

L'invention se propose de remédier à cet inconvénient.

L'invention propose une partie de roue et une roue avec indication du kilométrage parcouru par la roue.

Le dispositif de détection et d'enregistrement de paramètres de fonctionnement d'une roue de véhicule, en particulier d'une roue de véhicule à deux roues, est fixé sur l'entretoise tubulaire d'une roue comprenant un moyeu et une entretoise, tout en étant distinct de l'entretoise tubulaire. Le dispositif de détection et d'enregistrement et l'entretoise forment ainsi un ensemble pouvant faire partie d'une roue et équipé de moyens de comptage et de mémorisation du nombre de tours parcourus par la roue. Le diamètre de la roue étant par ailleurs connu, il est ainsi possible de déterminer la distance parcourue par la roue. On évite ainsi le risque de parcourir une distance excessive avec une roue, d'où une diminution de la probabilité de défaillance de la roue et une sécurité accrue.

Dans un mode de réalisation, le dispositif comprend un capteur, un circuit électronique et un bloc de matériau synthétique dans lequel sont noyés le capteur et/ou le circuit électronique. Avantageusement, le capteur et le circuit électronique sont protégés par le bloc de matériau synthétique.

Le dispositif peut comprendre une fixation sur l'entretoise par surmoulage, par collier ou encore par manchon rétractable. Le manchon peut se rétracter sous l'effet d'un refroidissement.

Dans un mode de réalisation, le capteur comprend un élément magnétosensible, de préférence du type interrupteur à lame souple. Un interrupteur à lame souple détecte avec fiabilité les variations de champ magnétique tout en étant de coût raisonnable.

Dans un mode de réalisation, le circuit électronique comprend un microcontrôleur relié au capteur, le microcontrôleur assurant la gestion et la mémorisation des signaux du capteur.

Dans un mode de réalisation, le circuit électronique comprend un émetteur radio pour envoyer à distance des informations. On peut ainsi prévoir un récepteur radio pour recevoir lesdites informations et les transmettre, par exemple à un ordinateur portable ou plus généralement à un moyen d'affichage de la distance parcourue.

L'ensemble d'entretoise instrumentée pour la détection et l'enregistrement de paramètres de fonctionnement d'une roue de véhicule comprend une entretoise tubulaire et un dispositif de détection et d'enregistrement de paramètres de fonctionnement, fixé sur l'entretoise, tout en étant distinct de ladite entretoise.

Dans un mode de réalisation, l'entretoise est munie d'une surface extérieure rainurée, ladite surface extérieure étant en contact avec le dispositif. On facilite ainsi l'immobilisation du dispositif sur l'entretoise. La rainure de la surface extérieure peut être circulaire ou hélicoïdale.

Le moyeu de roue de véhicule peut comprendre un moyeu, deux paliers à roulement supportant le moyeu, une entretoise tubulaire de maintien de l'écartement axial des paliers et un dispositif de détection et d'enregistrement de paramètres de fonctionnement de la roue, fixé sur l'entretoise tout en étant distinct de ladite entretoise. L'entretoise peut être disposée entre des surfaces frontales radiales des bagues intérieures des paliers.

Dans un mode de réalisation, au moins l'un des paliers est muni d'une bague extérieure supportant un codeur coopérant avec le dispositif de détection et d'enregistrement. Le codeur peut être du type magnétique à un ou plusieurs aimants. Le codeur peut se présenter sou la forme d'un ou plusieurs aimants ponctuels. Alternativement, le codeur peut se présenter sous la forme d'une bague annulaire aimantée de façon ponctuelle ou circonférentiellement régulièrement répartie, avec alternance de pôles nord et sud.

L'alimentation électrique du circuit électronique peut être assurée par une pile. Dans le cas de capteurs du type interrupteur à lame souple, la consommation électrique du dispositif est extrêmement faible. La durée de vie de la pile est suffisamment longue pour correspondre à la durée de vie de la roue. La pile peut être noyée dans un bloc de matériau synthétique en même temps que le circuit électronique ou bien être démontable. La pile peut être de type jetable ou rechargeable, par exemple par induction. Il est également possible de prévoir un capteur inductif assurant une transformation d'énergie magnétique en énergie électrique pour activer directement le circuit électronique comptant les impulsions.

La transmission des informations peut être assurée par le circuit électronique comprenant une antenne d'émission pour une transmission sans fil. La transmission des informations à un moment choisi peut être effectuée par exemple par la technique dite RFID. Le dispositif de lecture envoie des ondes électromagnétiques au dispositif de détection et d'enregistrement qui les reçoit par son antenne, utilise l'énergie émise par le lecteur et reçue par l'antenne pour moduler des ondes et les renvoyer vers le dispositif de lecture qui peut alors les décoder.

L'invention sera mieux comprise à la lecture de la description détaillée de quelques modes de réalisation pris à titre d'exemples nullement limitatifs et illustrés par les dessins annexés, sur lesquels :
- la figure 1 est une vue en coupe axiale d'une roue ;
- la figure 2 est une vue en coupe axiale de l'entretoise équipée du dispositif de détection ;
- la figure 3 est une vue en coupe axiale du palier à roulement de la roue de la figure 1 ;
- la figure 4 est une vue de face en élévation du palier à roulement de la figure 3 ;
- la figure 5 est une vue en coupe transversale de l'entretoise équipée du dispositif de détection ;
- la figure 6 est une vue de côté en élévation d'une entretoise ;
- la figure 7 est une vue en perspective d'une entretoise équipée d'un dispositif de détection ;
- la figure 8 est une vue en coupe axiale de l'entretoise à la figure 7 ;
- la figure 9 est une vue en coupe transversale de l'entretoise de la figure 8 équipée du dispositif de détection ; et
- la figure 10 est une vue en perspective d'une entretoise équipée d'un dispositif de détection.

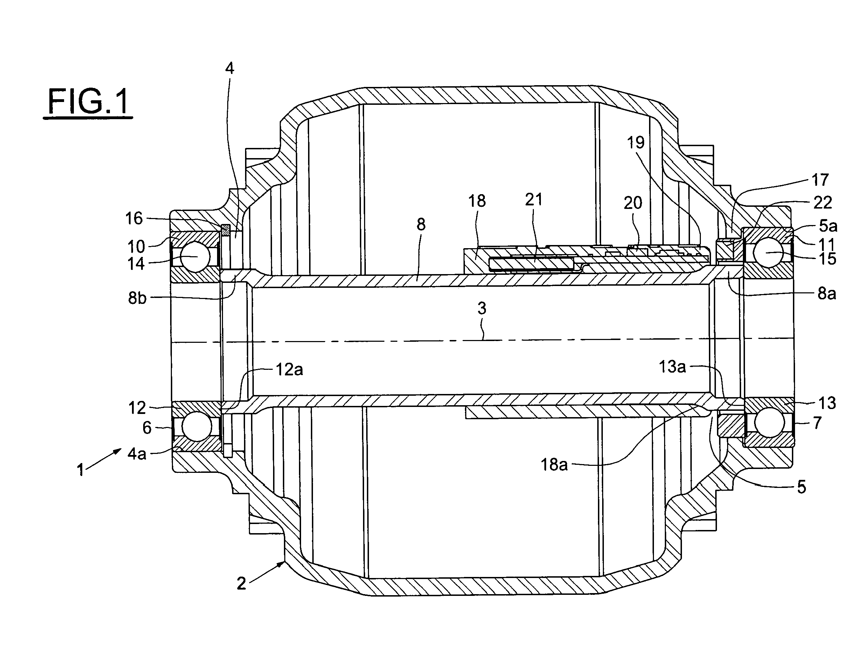

Comme on peut le voir sur la figure 1, la roue 1 comprend un moyeu 2 se présentant sous la forme d'une pièce de forme générale annulaire autour d'un axe géométrique 3. Le moyeu comprend une ouverture 4, 5 à chacune de ses extrémités axiales. Une jante de roue non représentée peut être fixée sur une surface extérieure du moyeu 2. Le moyeu 2 peut être réalisé en alliage léger, par exemple à base de magnésium ou d'aluminium.

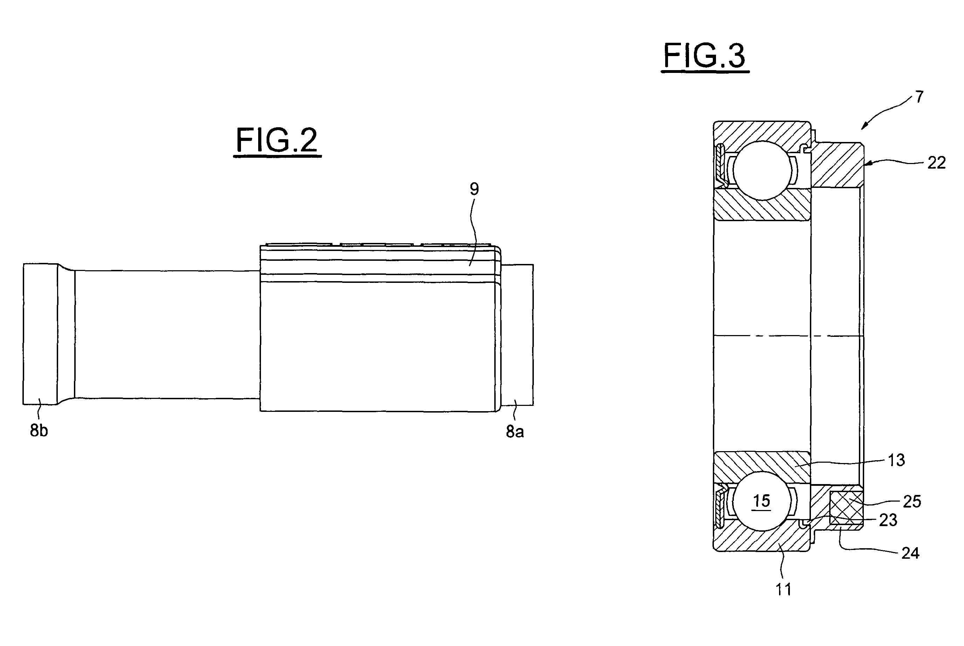

La roue 1 comprend également deux paliers à roulement 6 et 7 montés dans des alésages 4a, 5a, ménagés à l'extrémité des ouvertures 4 et 5. La roue 1 comprend une entretoise 8 se présentant sous la forme générale d'un tube orienté selon l'axe 3 et disposé entre les paliers à roulement 6 et 7, voir aussi figure 2. La roue 1 comprend également un dispositif de détection et d'enregistrement 9 fixé sur l'entretoise 8.

Les paliers à roulement 6, 7, comprennent une bague extérieure 10, 11, une bague intérieure 12, 13, une rangée d'éléments roulants 14, 15, par exemple des billes, disposés entre des chemins de roulement formés sur l'alésage des bagues extérieures 10, 11 et sur la surface extérieure des bagues intérieures 12, 13. Les bagues extérieures 10 et 11 et intérieures 12 et 13 peuvent être réalisées par usinage d'une ébauche issue d'une portion de tube, voir aussi figure 3. Les bagues extérieures 10 et 11 sont respectivement emmanchées dans les alésages 4a, 5a des extrémités 4 et 5 du moyeu. La bague extérieure 10 du palier à roulement 6 vient en butée axiale contre un circlips 16 monté dans une rainure ménagée dans l'alésage 4a de l'ouverture 4. La bague extérieure 11 du palier à roulement 7 vient en butée axialement contre une nervure annulaire 17 en saillie radiale vers l'intérieur par rapport à l'alésage 5a de l'ouverture 5.La nervure 17 peut être monobloc avec le moyeu 2.

L'entretoise 8 est serrée axialement entre des faces frontales radiales 12a, 13a, des bagues intérieures 12 et 13, ce qui assure son maintien en position. Après le montage de la roue, par exemple sur une fourche de moto, le serrage est assuré par les écrous de fixation en prise sur une tige filetée (non représentée) passant dans l'alésage de l'entretoise 8 et des bagues intérieures 12 et 13.

Dans le mode de réalisation illustré, l'entretoise 8 présente une forme de révolution avec un diamètre sensiblement constant sauf à ses extrémités axiales où une légère déformation en oblique vient former des zones d'extrémité 8a et 8b de diamètre légèrement supérieur. Le dispositif de détection et d'enregistrement peut être surmoulé sur la surface extérieure de l'entretoise 8 à proximité de la zone d'extrémité de grand diamètre 8a qui peut participer à son positionnement axial.

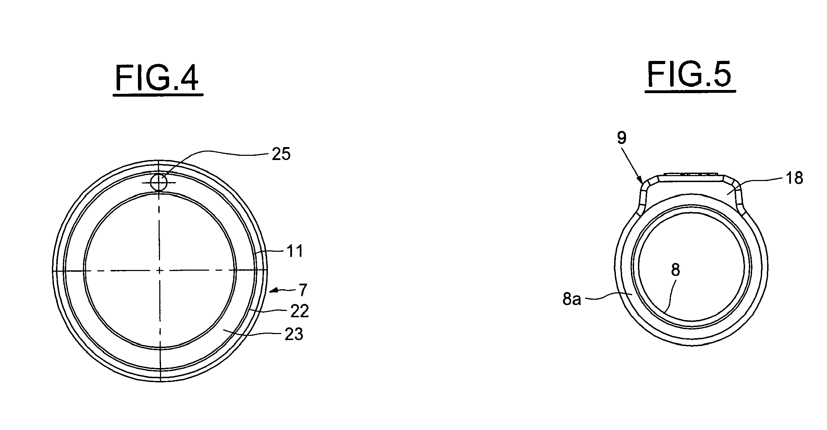

Le dispositif de détection et d'enregistrement 9 comprend un bloc 18 réalisé en matériau synthétique dans lequel sont disposés un capteur 19, un circuit électronique 20 et optionnellement une pile 21 de type rechargeable ou non, amovible ou fixée à demeure. Le bloc capteur 18 entoure une partie de la longueur de l'entretoise 8 et présente la forme d'un manchon, voir aussi figure 5. Comme on peut le voir sur la figure 2, le dispositif de détection et d'enregistrement 9 forme un sous-ensemble avec l'entretoise 8, qui peut être manipulé aisément et monté dans un moyeu de roue préalablement dépourvu de moyens de comptage de la distance parcourue par la roue.

Le palier à roulement 7 est muni d'un codeur 22. Le codeur 22 peut être fixé dans une rainure de la bague extérieure 11 ménagée à la jonction entre une surface frontale radiale et l'alésage de ladite bague extérieure 11. Le codeur 22, visible plus en détail sur les figures 3 et 4, peut présenter une forme annulaire et comprend un support 23 fixé dans la bague extérieure 11, un aimant 25 et un enrobage 24, par exemple en matériau synthétique et séparant l'aimant 25 du support 23. Le support 23 peut être réalisé en alliage léger.

Le codeur 22 est en saillie axiale par rapport aux bagues 11 et 13 du palier à roulement 7 du côté de l'entretoise 8. Le codeur 22 entoure la zone d'extrémité 8a de grand diamètre de l'entretoise 8 et est disposé sensiblement au niveau de la nervure 17 du moyeu 2. Le codeur 22 est disposé avec un faible entrefer axial par rapport au capteur 19 du dispositif de détection et d'enregistrement 9.

Dans le mode de réalisation représenté, le codeur 22 comprend un aimant 25 générant un signal magnétique à chaque tour en passant devant le capteur 19. Un capteur 19 peut comprendre un interrupteur à lame souple également connu sous l'acronyme ILS dont la consommation d'énergie électrique est extrêmement faible et qui génère un signal électrique à chaque stimulation magnétique générée par l'aimant 25 du codeur 22. Le capteur 19 génère donc un signal à chaque tour. Ledit signal est reçu par le circuit électronique 20 et peut être enregistré, par exemple par incrémentation d'un compteur.

Les informations mémorisées dans le dispositif peuvent être restituées à la demande et transférées à un système extérieur en vue d'une lecture et d'une exploitation de ces informations. Avantageusement, le transfert des informations peut se faire par des moyens de transmission sans fil, par exemple grâce à une antenne reliée au circuit électronique 20, ladite antenne transmettant à un lecteur distant de la roue le nombre de tours effectués ou la distance parcourue par ladite roue.

Le déclenchement et la transmission desdites informations à distance peuvent être effectués par la technique dite RFID. On peut se reporter au document JP 2006 039 911 ou encore JP 2002 049 900.

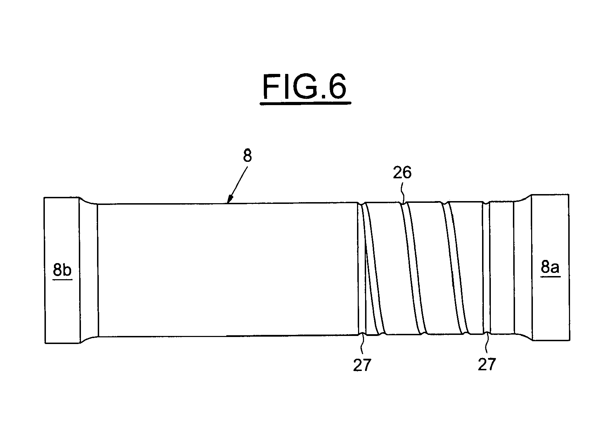

Dans le mode de réalisation illustré sur la figure 6, la surface extérieure de l'entretoise 8 est pourvue d'une rainure hélicoïdale 26 ménagée sur sa surface extérieure, axialement au voisinage de la zone d'extrémité 8a de grand diamètre. La rainure hélicoïdale 26 peut se terminer par deux rainures annulaires 27. Les rainures hélicoïdale 26 et annulaires 27 sont bien adaptées à un dispositif de détection et d'enregistrement 9 surmoulé sur l'entretoise 8. Le surmoulage assure la pénétration du matériau synthétique du bloc 18 dans les rainures 26 et 27 et par conséquent une solidarisation tant axiale qu'angulaire du dispositif de détection et d'enregistrement 9 avec l'entretoise 8.

Avantageusement, la carte électronique peut être surmoulée durant la même opération que le surmoulage de l'entretoise. En d'autres termes, on dispose dans le même moule la carte électronique qui peut éventuellement comporter également une pile d'alimentation, et l'entretoise, et l'on injecte la matière plastique pour former un ensemble indémontable dans lequel l'électronique est parfaitement protégée tant des chocs que de la pollution éventuelle. La présence des rainures 26 et 27 permet en outre de s'affranchir des problèmes de dilatation différentielle entre le matériau synthétique du bloc 18 et l'entretoise métallique 8 en cas de variation importante de température, réduisant ainsi le risque de désolidarisation entre l'entretoise et le bloc 18.

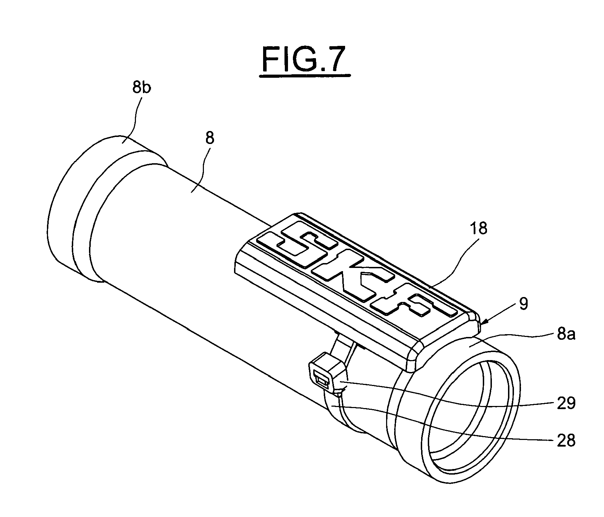

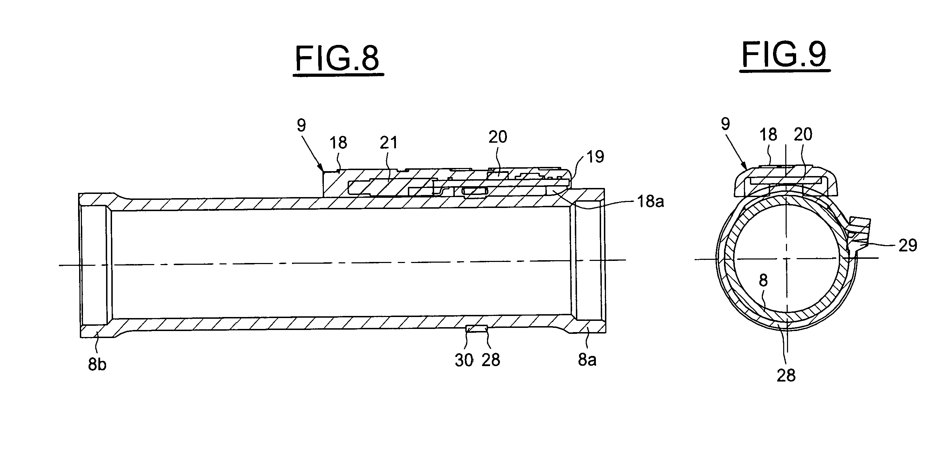

Dans le mode de réalisation illustré sur les figures 7 à 9, le dispositif de détection et d'enregistrement 9 comprend un bloc 18 occupant un secteur angulaire relativement limité autour de l'entretoise 8 et fixé par un bracelet 28 entourant l'entretoise 8 et le bloc 18 ou passant par au moins une bride du bloc 18. Le bracelet 28 peut être réalisé à base de matériau synthétique, par exemple du Rilsan® et peut comprendre un organe de serrage et de retenue 29. Avantageusement, le bracelet 28 est disposé au moins en partie dans une rainure annulaire 30 ménagée sur la surface extérieure de l'entretoise 28. La coopération du bracelet 28 et de la rainure annulaire 30 assure un positionnement axial précis du dispositif de détection et d'enregistrement 9, ce qui est souhaitable afin d'assurer un entrefer déterminé entre le capteur et le codeur. Par ailleurs, le serrage du bracelet 28 assure une solidarisation angulaire du dispositif de détection et d'enregistrement 9 et de l'entretoise 8. Alternativement, la fixation du dispositif de détection et d'enregistrement 9 peut être assurée par deux bracelets distants l'un de l'autre.

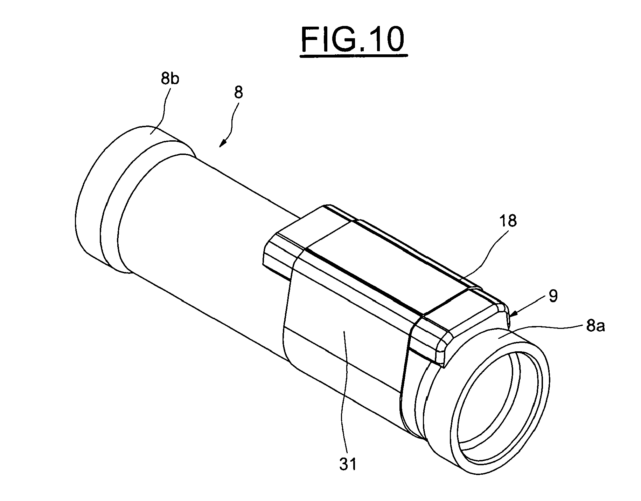

Dans le mode de réalisation illustré sur la figure 10, la fixation du dispositif de détection et d'enregistrement 9 sur l'entretoise 8 est assurée par un manchon thermorétractable 31 présentant une longueur axiale légèrement inférieure à celle du bloc 18. Le bloc 18 est similaire à celui illustré sur les figures 6 et 7. Le manchon 31 est disposé autour de l'entretoise 8 et du bloc 18 puis rétracté par application de chaleur. La rétraction du manchon 31 serre le bloc 18 contre l'entretoise 8 et assure ainsi une solidarisation fiable tant angulairement qu'axialement.

Par ailleurs, le positionnement axial du bloc 18 par rapport à l'entretoise 8 est assuré par le contact entre une extrémité du bloc 18 présentant un chanfrein 18a, voir figures 1 et 7, et la portion oblique de l'entretoise 8 formant la jonction avec la zone d'extrémité 8a de grand diamètre.

On peut bien entendu prévoir d'ajouter, dans le bloc 18, d'autres capteurs, par exemple un capteur de température effectuant des mesures périodiquement suivant des intervalles et des conditions prédéfinis.

Grâce à l'invention, on peut transformer à coût faible une roue standard en une roue équipée d'un dispositif de détection et d'enregistrement de paramètres de fonctionnement par un simple échange de l'entretoise séparant les bagues non tournantes des paliers à roulement. Cette opération d'échange ne nécessite aucun usinage particulier des pièces environnantes. L'échange s'effectue donc de façon aisée et propre.

## Revendications

1. Dispositif de détection et d'enregistrement (9) de paramètres de fonctionnement d'une roue (1) de véhicule, en particulier d'une roue de véhicule à deux roues, la roue (1) comprenant un moyeu (2) et une entretoise (8), **caractérisé par le fait que** le dispositif (9) est fixé sur l'entretoise tubulaire (8) tout en étant distinct de ladite entretoise tubulaire (8).

2. Dispositif selon la revendication 1, comprenant un capteur (19), un circuit électronique (20) et un bloc de matériau synthétique (18) dans lequel sont noyés le capteur et/ou le circuit électronique.

3. Dispositif selon la revendication 2, dans lequel le capteur (19) comprend un élément magnéto-sensible du type interrupteur à lame souple.

4. Dispositif selon la revendication 2 ou 3, dans lequel le circuit électronique (20) comprend un microcontrôleur relié au capteur, le microcontrôleur assurant la gestion et la mémorisation des signaux du capteur.

5. Dispositif selon l'une quelconque des revendications précédentes, dans lequel le circuit électronique (20) comprend un émetteur radio pour envoyer à distance des informations.

6. Dispositif selon l'une quelconque des revendications précédentes, comprenant une fixation sur l'entretoise par surmoulage.

7. Dispositif selon l'une quelconque des revendications 1 à 5, comprenant une fixation sur l'entretoise par collier (28).

8. Dispositif selon l'une quelconque des revendications 1 à 5, comprenant une fixation sur l'entretoise par manchon rétractable (31).

9. Ensemble d'entretoise instrumentée pour la détection et l'enregistrement de paramètres de fonctionnement d'une roue de véhicule, **caractérisé par le fait qu'**il comprend une entretoise tubulaire (8) et un dispositif de détection et d'enregistrement (9) de paramètres de fonctionnement fixé sur l'entretoise (8), tout en étant distinct de ladite entretoise (8).

10. Ensemble selon la revendication 9, dans lequel l'entretoise (8) est munie d'une surface extérieure rainurée, ladite surface extérieure étant en contact avec le dispositif.

11. Ensemble selon la revendication 10, dans lequel au moins une rainure (27) de ladite surface extérieure est circulaire.

12. Ensemble selon la revendication 10 ou 11, dans lequel au moins une rainure (26) de ladite surface extérieure est hélicoïdale.

13. Moyeu de roue de véhicule comprenant un moyeu (2), deux paliers à roulement (6, 7) supportant le moyeu, une entretoise tubulaire (8) de maintien de l'écartement axial des paliers et un dispositif de détection et d'enregistrement (9) de paramètres de fonctionnement de la roue fixé sur l'entretoise (8), tout en étant distinct de ladite entretoise (8).

14. Moyeu selon la revendication 13, dans lequel au moins l'un des paliers est muni d'une bague extérieure (11) supportant un codeur (22) coopérant avec le dispositif de détection et d'enregistrement.

15. Moyeu selon la revendication 14, dans lequel le codeur (22) comprend au moins un aimant.
